# EUROPÄISCHE PATENTANMELDUNG

(11) **EP 2 438 885 A1**
(43) Veröffentlichungstag der Anmeldung: **11.04.2012**
(21) Anmeldenummer: 11008059.5
(22) Anmeldetag: 05.10.2011
(51) Int. Cl.: A61C 8/00

(54) **Einteiliges Zahnimplantat und Biegeinstrument**

(30) Priorität: 05.10.2010 CH 16322010
(71) Anmelder: Moser, Walter, 5018 Erlinsbach (CH)
(72) Erfinder: Moser, Walter, 5018 Erlinsbach (CH)
(74) Vertreter: Vossius, Corinna

(57) **Zusammenfassung**

Einteiliges Zahnimplantat, insbesondere aus Titan, mit einer insbesondere schraubenförmigen Geometrie im Bereich der Zahnwurzel, welches in einem Bereich des Schleimhautdurchtrittes zwischen einem Wurzelanteil bzw. Verankerungsteil und einem koronalen Anteil bzw. Teil eine Biegezone besitzt, an welcher ein Kragen zur Aufnahme eines Instrumentes vorgesehen ist und welche mittels eines Biegeinstrumentes nach erfolgter Implantation kontrolliert im Bereich der Biegezone gebogen werden kann.

## Beschreibung

Die Erfindung betrifft ein einteiliges Zahnimplantat, dessen prothetisches Aufnahmeteil nach der Implantation in den Kieferknochen durch gezielte Verbiegung mittels eines geeigneten Instrumentes in eine für die Versorgung mit einem zahnprothetischen Aufbau geeignete Orientierung gebracht wird.

### Stand der Technik:

Zahnimplantate sind in vielfacher Ausführung entweder als einteilige Konstruktionen oder als zweiteilige Konstruktionen bekannt, wobei den zweiteiligen Ausführungen wegen gewisser Vorteile meist der Vorzug gegeben wird. Bei der zweiteiligen Ausführung wird zunächst eine künstliche Zahnwurzel in den Kieferknochen implantiert und diese anschließend mit einer zweiten Komponente, dem Aufbaupfosten, verbunden. Die Verbindung mit dem Aufbaupfosten erfolgt entweder intraoperativ oder nach einer Einheilungsphase von mehreren Wochen. Liegt die Verbindungsstelle zwischen künstlicher Zahnwurzel und Aufbaupfosten unterhalb des Zahnfleischniveaus, kann nach der chirurgischen Abdeckung mit der Schleimhaut die Zahnwurzel unbelastet einheilen. Damit kann eine sichere, nicht durch lastbedingte Mikrobewegungen gestörte knöcherne Einheilung erzielt werden. In Fällen, wo die primäre Verankerungsstabilität der Zahnwurzel im Kieferknochen eine mikrobewegungsfreie Einheilung unter moderater Belastung zulässt, kann eine intraoperative Montage des Aufbaupfostens erfolgen. Auf Grund der Stimulation des Knochenwachstums durch die mechanischen Reize kann bei ausreichender primärer Stabilität so eine raschere Osseointegration der Zahnwurzel erzielt werden.

Die künstliche Zahnwurzel weist dazu einen Verbindungsmechanismus auf, mittels welchem der Aufbaupfosten mechanisch fest mit der Zahnwurzel verbunden wird. Bekannte Ausführungen sind formschlüssige, z.B. mit Schrauben gesicherte Sechskant- oder Achtkantverbindungen oder alternativ Konusverbindungen. Dieser Aufbaupfosten trägt die spätere zahnprothetische Konstruktion, welche entweder fest oder abnehmbar montiert wird. Als Implantatformen für die künstliche Zahnwurzel werden häufig schraubenförmige Geometrien (WO 2008/128756) oder zylinderförmige Geometrien mit strukturierter Oberfläche (EP 0657144) verwendet, wobei in den meisten Anwendungen der schraubenförmigen Verankerungen wegen der Vorteile bei der Primärstabilität und der Einfachheit der Handhabung der Vorzug gegeben wird. Als Werkstoffe für die Bauteile der zweiteiligen Systeme haben sich Titanlegierungen etabliert, welche im Bereich der künstlichen Zahnwurzel durch verschiedene Technologien mit rauen, porösen Oberflächen, welche die Osseointegration begünstigen, versehen sind. Zusätzlich zur Makro- und Mikrostruktur sind Kalzium-Phosphat-Beschichtungen verschiedenster Kristallographie und Morphologie als die Knochenapposition fördernde Schichten bekannt.

Nach erfolgter Implantation kann bei den zweiteiligen Implantaten ein nach Grösse und Orientierung ausgesuchter Aufbaupfosten eingesetzt werden. Damit kann die Ausrichtung der künstlichen Zahnwurzel, welche sich nach den Bedingungen des Kieferknochens richtet, unabhängig sein von der Ausrichtung des prothetischen Aufbaus, welcher sich nach den Bedingungen des Zahnersatzes richtet. Durch die Zweiphasigkeit kann also den für die Implantationsregion spezifischen und den patienten-individuellen geometrischen Bedingungen entsprochen werden. Zusätzlich können diese Aufbaupfosten mittels Schleifbearbeitung in geringem Ausmaß angepasst werden.

Die Konstruktionen, welche für die Verbindung zwischen künstlicher Zahnwurzel und Aufbaupfosten verwendeten werden, müssen die erheblichen Kaukräfte, welche über die zahnprothetische Konstruktion in den Aufbaupfosten eingeleitet werden, übertragen. Dabei wirken sowohl axiale Kräfte wie auch Kippmomente und Rotationsmomente auf diese Verbindung. Eine bekannte Ausführung, welche diese Anforderungen erfüllt, ist in DE 19633570 C1 in Form einer zylindrischen Steckverbindung, welche mittels radial angebrachten Nuten gegen Rotation gesichert ist und mittels einer zentralen Schraube verspannt wird, beschrieben. Weitere Ausführungen sind nicht selbsthemmende konische Steckverbindungen, welche mittels ineinander greifender Sechs- oder Achtkantverbindungen gegen Rotation gesichert sind und welche ebenfalls mit einer zentralen Schraube montiert werden. Eine derartige Verbindung ist z.B. in WO 2008/128756 beschrieben. Diese formschlüssig gegen Verdrehung gesicherten Verbindungen ermöglichen einerseits die einfache Übertragung der Rotationsposition zwischen dem zahntechnischen Modell und der Situation im Mund des Patienten, erlauben aber andererseits keine freie Wahl der Rotationsposition des Aufbaupfostens. Je nach technischer Ausführung sind meist sechs oder acht mögliche Positionen vorgegeben. Dies ist im Fall der schraubenförmigen knöchernen Verankerung von besonderer Bedeutung, da dort die Rotationsposition des Implantates sich durch die Implantation ergibt und nicht frei wählbar ist.

Eine weitere Ausführung, welche eine freie Wahl der Rotationsposition des Aufbaupfostens relativ zur künstlichen Zahnwurzel erlaubt, ist in EP 0707835 in Form einer selbsthemmenden Konusverbindung, welche mit einer zentralen Schraube gesichert ist, beschrieben.

Kritisch sind alle diese Montageverbindungen besonders im Hinblick auf den Kompromiss zwischen möglichst kleiner Baugrösse, d.h. möglichst kleinem Implantatdurchmesser und der Betriebssicherheit. Neben der Sicherheit gegen Lockerung oder Ermüdungsbruch der Verbindung durch die zyklische Kaubelastung sind hohe Anforderungen an die Dichtigkeit, d.h. Spaltfreiheit dieser Verbindung zu stellen. Spaltbehaftete Konstruktionen werden leicht mit Keimen besiedelt und wirken so als Herde, von welchen Entzündungen ausgehen.

Aus fertigungstechnischen Gründen sind mit Ausnahme der Konusverbindung alle formschlüssigen Verbindungen mit zumindest kleinsten Spalten behaftet. Dies gilt für den unbelasteten Zustand, verstärkt sich aber bei kaufunktionaler Belastung deutlich. Wissenschaftliche Arbeiten, welche die Spaltentwicklung unter kaufunktioneller Belastung untersuchen, weisen nach, dass die meisten Verbindungen spaltgefährdet sind (Zipprich, Zeitschrift für Implantologie 15, 207). Diese Spaltbildung begünstigt bakterielle Kontamination und lässt sich mit der Resorption des zervikalen Knochenlagers korrelieren.

Demgegenüber sind einteilige Implantatsysteme wesentlich einfacher in ihrer geometrischen Gestaltung, da auf eine technische Verbindung, welche die Kaukräfte mit hoher Sicherheit zu übertragen hat, verzichtet werden kann. Einphasige Systeme sind deshalb wesentlich kostengünstiger. Auch ist die Gestaltungsfreiheit im zervikalen Bereich nicht durch die Notwendigkeit einer Bauvolumen beanspruchenden Verbindung eingeschränkt. Mit einphasigen Implantaten können deshalb auch, bei gleicher Dauerfestigkeit, kleinere Implantatdurchmesser realisiert werden. Historisch betrachtet wurden einteilige Implantate viel früher als die zweiteiligen Systeme verwendet.

Ein Beispiel für derartige Implantate, welche auch nach Insertion in den Kieferknochen durch Verbiegen angepasst wurden, sind die blattförmigen Implantate nach Linkow (zm 99, Nr. 22A, 16.11.2009). Diese Implantate wurden in schlitzförmige Kavitäten, welche in Kieferlängsrichtung präpariert wurden, eingesetzt. Nach Implantation wurde der den Zahnersatz aufnehmende Pfosten gegenüber der blattförmigen Verankerung, welche mit Durchbrüchen versehen war, durch Biegung mittels Zangen an die Situation im Mund des Patienten angepasst.

Im Falle von zylinderförmigen oder anderen, nicht mittels Schraubbewegung einzusetzenden künstlichen Zahnwurzelgeometrien können einteilige Zahnimplantate bei geeigneten Werkstoffen durch Verbiegung im Bereich des Aufbaupfosten vor der Implantation vorgeformt werden. Dadurch kann eine Anpassung der Ausrichtung des den Zahnersatz aufnehmenden Teils auf die Anforderungen des prothetischen Aufbaus vorgenommen werden. Im Falle der für die Verankerung vorteilhaften schraubenförmigen Zahnwurzeln ist dies wegen der durch die Implantationsposition vorgegebenen Rotationsposition, welche sich durch das Eindrehen bis zum festen Sitz ergibt, nicht möglich. Eine Anpassung der Orientierung des koronalen Teils nach Implantation durch kontrollierte Biegung ist wegen der hohen Kräfte, welche bei der Verbiegung auf das Knochenlager wirken, nicht oder nur in Fällen mit sehr günstigen Verankerungsbedingungen, d.h. bei grossen Längen der künstlichen Zahnwurzel und bei guten Knochenbedingungen möglich. Im Regelfall ist auf Grund der Kieferatrophie die Verwendung von kürzeren Implantaten, meist auch bei weicherer Knochenqualität, angezeigt, wobei eine Biegung nach Implantation das knöcherne Lager schädigen würde.

In DE 3918309 (sog. Bauer-Schraube) ist ein einteiliges Implantat mit einer Biegezone zwischen dem koronalen und dem Verankerungsteil beschrieben, dessen besonderes Merkmal die Anpassung des Implantates durch Biegung bezüglich des Ausrichtens des Implantatpfostens nach der Implantation ist. Das Implantat wird ohne Neutralisation der Biegekräfte nach Implantation im knöchernen Lager gebogen. Dies ist nur bei sehr langen Verankerungsgeometrien und sehr guter Knochenqualität möglich. Laut der in der produktbegleitenden Schrift beschriebenen Implantationstechnik wird davon ausgegangen, dass das Implantat bis zur Gegenkortikalis eingeschraubt wird. Die Realisierung kürzerer Verankerungsgeometrien, wie dies im Bereich der Unterkieferseitenzähne oder bei geringer Kieferkammhöhe notwendig ist, ist nicht möglich, da ein kürzeres Implantat bei der Biegung zu hohe Reaktionskräfte verursacht, welche zur Schädigung des knöchernen Lagers führen. Auch bei Verwendung in weicherem Knochen wird die Folge eines Biegevorgangs durch einfaches Verbiegen ohne Neutralisation der Biegekräfte eine Schädigung des Knochenlagers sein.

In DE 3241963 (sog. Münch-Schraube) ist ein zweiteiliges schraubenförmiges Implantat beschrieben, welches im Bereich des Durchtritts durch die Mundschleimhaut eine halsförmige Verjüngung aufweist, an welche sich nach apikal ein oder mehrere Wülste zum Zwecke der Anlagerung von Bindegewebe anschliessen. Das sich anlagernde Bindegewebe soll das knöcherne Lager gegen eindringende Keime abdichten. Dieses Implantat ist aus Keramik hergestellt und deshalb nicht zur Anpassung mittels Biegung geeignet.

In DE 3726616 (sog. Ledermann-Schraube) ist ein schraubenförmiges Implantat mit einer Verjüngungszone zwischen dem koronalen Geometrieanteil und der schraubenförmigen Zahnwurzel beschrieben, welches vorzugsweise aus Titan hergestellt ist, welches aber nicht zu Verbiegung nach erfolgter Implantation vorgesehen ist.

Neben dem Werkstoff Titan kamen für einteilige Zahnimplantate auch die Werkstoffe Aluminiumoxidkeramik und Kobaltlegierungen zum Einsatz, wobei sich diese Werkstoffe aus der Gruppe der Keramiken und Kobaltlegierungen auf Grund der geringeren Eignung zur Osseointegration nicht bewährt haben. Stand der Technik sind heute Titan-basierende Oberflächen, welche durch Beschichtungen oder durch gezielt partiell wirkenden Abtrag mikrostrukturiert sind. Als Abtragsverfahren werden insbesondere Strahl- und Ätzverfahren verwendet, häufig in Kombination.

Neben den klassischen Instrumenten wie Zangen und Klemmen zur Anpassung zahntechnischer Konstruktionen oder zahntechnischer Bauteile durch gezielte Verformung, d.h. durch Verbiegen, sind nur wenige spezifische Instrumente im Zusammenhang mit Dentalimplantaten beschrieben. In der Operationsanleitung zum Implantatsystem, welches in DE 3918309 beschrieben ist, sind einfache stabförmige Biegeschlüssel, welche am unteren Ende ein Negativ der Geometrie des koronalen Implantatendes tragen, vorgesehen. Damit findet keine Kompensation der Biegekräfte, welche auf das Implantatlager wirken, statt.

In der britischen Patentanmeldung GB 2450617 ist ein Biegeinstrument für einen Fixationsstift, der zur Verbindung einer Krone mit einer natürlichen Zahnwurzel dient, beschrieben. Derartige Fixationsstifte haben in der Regel im Bereich der Verankerung in der natürlichen Zahnwurzel einen konischen Durchmesser, der dann in einen konstanten Durchmesser übergeht. Das Instrument ist als einfaches Zweipunkt-Biegeinstrument vorgesehen, bei welchem der zylindrische Stift zwischen zwei Bolzen, welche zueinander einen leicht grösseren Abstand als der Durchmesser des Fixierstiftes aufweisen, durch Verdrehen dieser Bolzen gebogen wird. Das Instrument erlaubt so die Definition des Ortes der Biegung und in gewissem Ausmaß auch den Biegeradius des Fixationsstiftes. Für die Anwendung der Biegung von einteiligen Zahnimplantaten mit einer definierten Biegezone sind derartige Instrumente aber ungeeignet.

### Darstellung der Erfindung:

Aufgabe der Erfindung ist die Bereitstellung eines einteiligen Zahnimplantats mit insbesondere schraubenförmigem Zahnwurzelanteil bzw. Verankerungsteil und einem, den Zahnersatz aufnehmenden koronalen Anteil (Aufbaupfosten), wobei nach erfolgter Implantation die Ausrichtung des koronalen Anteils an die individuellen Bedingungen der Implantationsregion und des Patienten anpassbar sein soll.

Diese Aufgabe wird durch ein einteiliges Implantat, vorzugsweise aus Titan, gelöst, zur Verankerung im menschlichen Ober- oder Unterkiefer, mit einem vorzugsweise schraubenförmigen Verankerungsteil zum Einbringen in den Ober- oder Unterkiefer, im Bereich der Zahnwurzel, und mit einem koronalen Teil (oberer Teil) zur Aufnahme einer zahnprothetischen Konstruktion und einer dazwischen angeordneten Biegezone, d.h., zwischen Verankerungsteil und koronalem Teil angeordnet, wobei an einem (unteren) Ende der Biegezone, das heißt, in Richtung zum Verankerungsteil hin, eine kragenförmige Geometrie zur Aufnahme eines Instrumentes zur Klemmung des Implantats angeordnet ist bzw. anschließt.

Die Aufgabe wird ferner durch ein Biegeinstrument gelöst, bestehend aus einer vorzugsweise mechanischen Klemmvorrichtung, zur Klemmung einer kragenförmigen Geometrie an einem Zahnimplantat, und aus einer Haltevorrichtung zur Fixierung eines koronalen Endes bzw. Teils des Zahnimplantates sowie aus einer Vorrichtung, durch welche die Haltevorrichtung gegenüber der Klemmvorrichtung definiert bewegbar ist. Das Instrument dient also der geometrischen Anpassung des Implantats nach erfolgter Implantierung.

Somit lässt sich die Ausrichtung des koronalen Anteils des Implantats an die individuellen Bedingungen der Implantationsregion und des Patienten durch kontrolliertes Verbiegen, insbesondere nach Implantation des Implantats, mittels eines speziellen Instrumentes anpassen.

Das Instrument zur Klemmung des Implantats kann einerseits als das oben beschriebene Biegeinstrument vorgesehen sein, andererseits kann aber auch ein explizites Instrument vorgesehen sein, das die Verankerung des Implantats im Kiefer unterstützt bzw. ermöglicht.

Dazu verfügt das Implantat im Übergangsbereich zwischen Zahnwurzel (Verankerungsteil) und Aufbaupfosten über die kragenförmige Geometrie, welche mittels eines dafür konzipierten Instrumentes fest eingespannt wird. Der über der Einspannung liegende koronale Anteil bzw. Teil kann durch Verbiegen, ohne Einfluss der Biegekräfte auf den darunter liegenden Teil, also die künstliche Zahnwurzel, angepasst werden. Das dazu verwendete Instrument ist so konstruiert, dass es zum einen die Kräfte für die gezielte Verbiegung mit kontrolliertem Biegewinkel des Übergangsteils erzeugt, und zum anderen die Biegereaktionskräfte an der Einspannung des Kragens neutralisiert.

Bei der Implantation wird zunächst das knöcherne Lager mittels eines Bohrvorgangs vorpräpariert. Zur Vorbereitung der Verankerung einer Gewindegeometrie der künstlichen Zahnwurzel im Knochen wird diese mit einem geeigneten Instrument, z.B. einem Gewindeschneider, vorbereitet, oder es wird bei der künstlichen Zahnwurzel ein selbstschneidendes Gewinde gewählt. Die eigentliche Implantation erfolgt dann mittels eines Eindrehinstrumentes, welches das Implantat sicher fasst und die Aufbringung des Eindrehmomentes mit einem Handrad, einer Ratsche oder einem motorischen Antrieb erlaubt.

Nach erfolgter Implantation des Zahnwurzelteils bzw. Verankerungsteils im Kieferknochen wird das Biegeinstrument auf dem Aufbaupfosten positioniert und das Implantat wird am dafür vorgesehenen Kragen im Instrument fest eingespannt. Die Orientierung des Biegewerkzeuges relativ zum Kieferkamm kann dabei frei gewählt werden und gibt die Biegerichtung vor. Das Biegemoment wird am koronalen Ende des Aufbaupfostens mittels eines zum Pfosten formschlüssigen Halters eingeleitet. Durch einen geeigneten Vorschubmechanismus wird dann der Aufbaupfosten um einen definierten Winkel gebogen, wobei die Biegekräfte durch die Einspannung am Kragen neutralisiert werden. Somit wirken keine Kräfte des Biegevorgangs auf das knöcherne Lager der Zahnwurzel.

Weitere Ausführungsformen der Erfindung ergeben sich aus den Unteransprüchen.

Vorzugsweise ist die Biegezone verjüngt ausgebildet, und zwar insbesondere verjüngt gegenüber dem Verankerungsteil und dem koronalen Teil.

Vorzugsweise verjüngt sich die Geometrie der Biegezone ausgehend von der kragenförmigen Geometrie derart, dass bei Biegung entlang der Biegezone konstante Biegespannungen im Querschnitt auftreten.

Vorzugsweise ist das Implantat aus einer hoch plastisch deformierbaren Beta-Titanlegierung hergestellt.

Vorzugsweise ist die kragenförmige Geometrie verdickt und/oder wulstförmig und/oder rotationssymmetrisch ausgebildet.

Vorzugsweise ist die kragenförmige Geometrie im Längsschnitt rund, dreiecksförmig oder rechteckig ausgebildet.

Vorzugsweise ist die Vorrichtung des Biegeinstruments als eine Biegevorrichtung ausgebildet.

Vorzugsweise ist die Haltevorrichtung auf einem Kreisbogen relativ zur Klemmvorrichtung bewegbar.

Vorzugsweise ist die Haltevorrichtung mittels der Biegevorrichtung relativ zur Klemmvorrichtung bewegbar.

Vorzugsweise sind die Klemmvorrichtung und/oder die Biegevorrichtung mit einem Gewindespindelantrieb ausgebildet.

### Aufzählung der Zeichnungen:

Beschreibung der Erfindung anhand eines Ausführungsbeispiels, dargestellt in den Figuren 1 bis 4:
Fig. 1: einteiliges Zahnimplantat mit Biegezone und Kragen zur Aufnahme in dem Biegeinstrument.
Fig. 2 a) Biegeinstrument zur kontrollierten Biegung des Aufbaupfostens und zur Neutralisation der Biegekräfte, im Halbschnitt gezeichnet, mit Handgriff und Antriebsschlüssel.

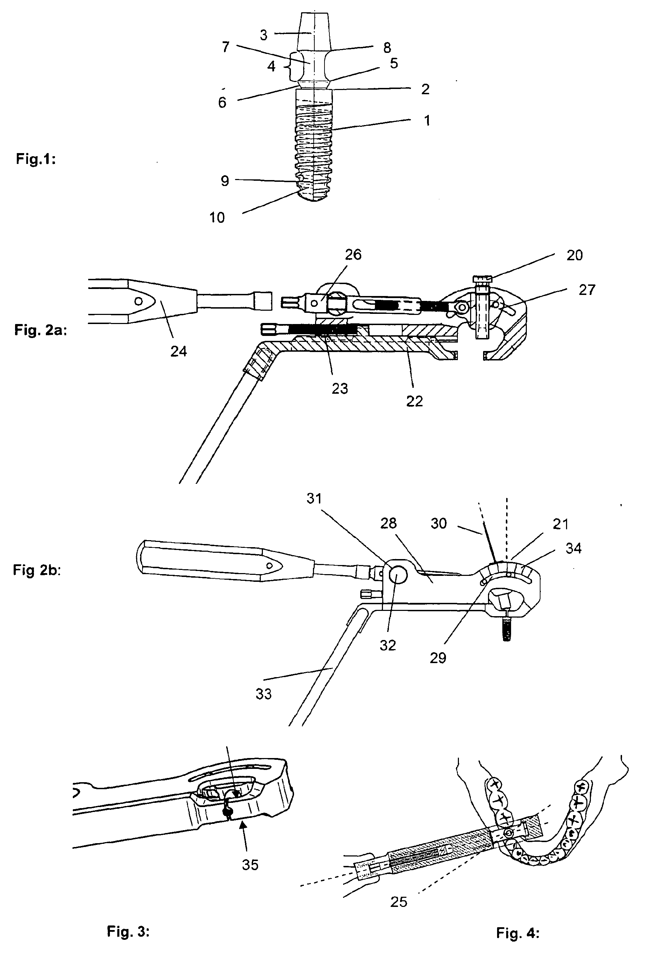

Fig. 2 b) Detailansicht des Biegewerkzeuges mit eingespanntem einteiligem Zahnimplantat, nach dem Biegevorgang.
Fig. 3) Ansicht des Biegewerkzeuges mit Bereich der Einspannung des Zahnimplantates, von apikal betrachtet.
Fig. 4) Ansicht des Instrumentes und dessen Ausrichtung relativ zum Kieferbogen aus der transversalen Ebene.

### Ausführung der Erfindung:

In der Figur 1 ist eine Ausführung eines einteiligen Zahnimplantates dargestellt, mit der Geometrie einer künstlichen Zahnwurzel bzw. eines Verankerungsteils 1, welche bzw. welches nach der Implantation unterhalb des Knochenniveaus 2 liegt. Das hier dargestellte Gewinde ist ein sich mit zunehmender Eindrehtiefe selbst blockierendes, so genanntes Expansionsgewinde, welches zusätzlich zum kegelförmigen Gewindegrund über eine sich über die Gewindelänge ändernde Flankengeometrie verfügt. Neben Gewinden mit zylindrischer Außenform und kegelförmigem Gewindegrund sind auch Gewinde mit kegelförmiger Außengeometrie und zylindrischem oder kegelförmigem Gewindegrund möglich. Alternativ zu diesen Gewindeformen sind auch andere Gewindeformen denkbar, so z.B. Gewindeformen, welche sich gut für selbstschneidende Gewinde eignen. Diese Gewinde verfügen über Schneidkanten 9 an den Gewindeflanken, und Spannuten 10, welche so ausgebildet sind, dass das Implantat in der vorgeformten glatten Kavität sich mit zunehmender Eindrehtiefe eine Gewindestruktur selbst ausformt. Das so entstehende Knochengewinde entsteht durch Zerspanen oder durch Verdrängen, wodurch die Eindrehcharakteristik und die Verklemmeigenschaften, d.h. die Primärstabilität, bestimmt werden. Neben der gewindeförmigen Makrostruktur ist der Bereich der künstlichen Zahnwurzel mit einer Mikrostruktur, hergestellt durch Auftrag oder gezieltem Abtrag, aufgeraut. Diese rauen Strukturen dienen einerseits der Anregung des Knochenanwachsens, andererseits der dauerhaften festen Verzahnung mit dem Knochen nach der Einheilphase. Derartige Mikrostrukturen werden durch Strahlverfahren, durch Ätzverfahren oder durch eine Kombination dieser beiden abtragenden Verfahren oder durch ein auftragendes Verfahren, z.B. die Beschichtung mit einer Titan-Plasma-Spritzschicht, erzeugt.

Ein koronaler Teil bzw. Anteil 3 ist zum Tragen einer zahntechnische Konstruktion (nicht gezeigt) ausgebildet, welche abnehmbar oder fest verbunden gestaltet werden kann. Zwischen koronalem und apikalem Anteil befindet sich ein Bereich für den Schleimhautdurchtritt 4 an dessen unterem Ende ein Einspannkragen bzw. eine kragenförmige Geometrie 5 mit einer darunter liegenden Nut 6 liegt. Eine Biegezone 7 erstreckt sich vom Kragen 5 bis zu einem Rand 8 des koronalen Anteils 3. Der Biegebereich 7 ist so ausgelegt, dass bei Aufbringung eines Biegemomentes eine knickfreie Biegung erzielt wird. Zur Erzielung einer homogenen Biegespannung verjüngt sich diese Geometrie, nach den Gesetzen des Biegebalkens, ausgehend von der Einspannung am Kragen bzw. der kragenförmigen Geometrie 5 zur Krafteinleitung (mittels eines geeigneten Instruments) zum koronalen Ende hin. Die Biegezone und der Biegevorgang sind so zu gestalten, dass durch die Biegung keine Vorschädigung des Werkstoffes entsteht. Spröde oder rissempfindliche Werkstoffe scheiden deshalb für das Konzept der intraoperativen Anpassung durch gezielte, kontrollierte Biegung aus. Als Werkstoffe kommen z.B. Rein-Titan oder Titanlegierungen mit ausreichender Verformbarkeit in Frage. Über ausgezeichnete Verformungseigenschaften bei Raumtemperatur bei gleichzeitig hoher Festigkeit verfügen Beta-Titanlegierungen, welche in verschiedenen Bereichen der Technik und der Implantattechnik eingesetzt werden. Beispielhaft seien hier die Legierungen Ti15Mo nach ASTM F 2066-01 oder die Legierung Ti 15Mo5Zr aufgeführt. Je nach Vorbehandlung und Gefügezustand verfügen diese Legierungen über sehr hohe Bruchdehnungswerte, d.h. über eine sehr hohe Kaltverformbarkeit, ohne dass bleibende Schädigungen auftreten.

Der verjüngte Biegebereich 7 dient gleichzeitig der Anlagerung der Mundschleimhaut. Durch die verjüngte Geometrie und dem anschließenden Kragen 5 entsteht eine Barriere gegen das Eindringen von Keinem aus dem Mundraum in den Bereich der knöchernen Verankerung in Form einen Labyrinthes.

In den Figuren 2a, 2b, 3 und 4 ist eine Ausführungsform einer Biegeeinrichtung bzw. eines Biegeinstruments zu sehen, welche bzw. welches nach Implantation auf dem koronalen Anteil 3 positioniert wird und das Implantat am Kragen (kragenförmige Geometrie) 5 klemmt, um schließlich eine definierte Biegung am Biegebereich 7 auszuüben.

Das Biegeinstrument ist auf dem koronalen Teil mittels einer Haltevorrichtung 20 zur Fixierung des koronalen Teils 3 positionierbar, wobei die Haltevorrichtung hier als ein Biegestempel vorgesehen ist. Die Haltevorrichtung 20 ist z.B. mit einem Aufnahmebereich ausgebildet, in welchen der koronale Teil 3 zumindest teilweise oder auch vollständig aufnehmbar und das Implantat so fixierbar ist. In Fig. 2a ist gezeigt, dass sich der Biegestempel 20 in einer auf dem Instrument markierten Nullposition 21 einer Skalierung 34 befindet (siehe auch Fig. 2b). Wegen des Formschlusses von Biegestempel und koronaler Geometrie des Implantates zentriert sich dadurch das Instrument von selbst auf dem Implantat. Für unterschiedliche Ausführungen des koronalen Teils oder für verschiedene Bauhöhen des Biegebereichs 7, welche wegen unterschiedlicher Dicken der Mundschleimhaut notwendig werden können, ist der Biegestempel auswechselbar.

Des Weiteren ist eine Klemmvorrichtung 22, 23 vorgesehen, mit welcher das Implantat fassbar ist und damit (ein-)geklemmt werden kann. Ein Klemmschieber 22 ist in Fig. 2a in einer geöffneten Position dargestellt. Nach der Positionierung wird das Implantat am Kragen 5 durch Schliessen des Klemmschiebers (geschlossene Position) mittels einer Klemmspindel (Gewindespindel) 23, welche ein Gewinde trägt, geklemmt. Die Bedienung der Klemmspindel erfolgt vorzugsweise mit einem Universalschlüssel 24.

Die Geometrie des Instrumentes ist in der Höhe und in der transversalen Richtung so ausgelegt, dass eine Montage im Mund des Patienten sowohl im Frontzahnbereich wie auch im Seitenzahnbereich möglich ist. Die Breite 35 des Instrumentes im Bereich der Einspannung des Zahnimplantates (Fig. 3) ist so ausgestaltet, dass es im Falle eines Einzelzahnersatzes in einer Zahnlücke positioniert werden kann. Die Ebene relativ zum Zahnbogen, in welcher die kontrollierte Verbiegung erfolgen soll (Fig. 4), wird durch die Ausrichtung 25 des Instrumentes relativ zum Zahnbogen festgelegt.

Ist das Instrument in der beabsichtigten Biegeebene positioniert und geklemmt, wird die Verbiegung am Biegebereich 7 kontrolliert mittels einer Biegevorrichtung vorgenommen. Die Biegevorrichtung weist eine Biegespindel (Gewindespindel) 26 auf, die vorzugsweise mit dem Universalschlüssel 24 betätigbar ist. Die Biegespindel 26 betätigt dabei einen Biegeschlitten 27, welcher in einem Gehäuse 28 des Biegeinstruments in einer geeigneten Führung 29 zwangsgeführt ist. Die Zwangsführung liegt auf einer Kreisbahn mit Mittelpunkt der Biegezone 7 des Zahnimplantates. Damit wird das Implantat in der beabsichtigten Zone durch Bewegen bzw. Betätigen der Haltevorrichtung 20 über die Biegevorrichtung kontrolliert verformt. Der aktuelle Biegewinkel ist an der Skalierung 34 am Instrument ablesbar und kann zusätzlich an einem Zeiger 30 kontrolliert werden, welcher am Biegestempel angeordnet, z.B. in einer Bohrung in den Biegestempel 20 eingesteckt ist, und welcher die Achsausrichtung des koronalen Teils des Implantates repräsentiert.

Somit kann eine kontrollierte Biegung am Biegebereich 7 erfolgen, wobei aufgrund der Klemmung des Implantates Biegkräfte hin zum Verankerungsteil 1 neutralisiert werden.

Wegen der linear elastischen Eigenschaften des Implantatwerkstoffes muss das Implantat zur Erreichung des gewünschten Biegewinkels um einen bestimmten Betrag, um welchen der Implantatwerkstoff zurückfedert, überbogen werden. Dieser Betrag richtet sich nach dem verwendeten Werkstoff und der Geometrie der Biegezone. Dieser Wert kann ermittelt und dem Anwender z.B. in einer Tabelle dargestellt werden.

Zur Sichtbarmachung des finalen Biegwinkels verfügt ein Drehlager 31 der Vorschub- bzw. Biegespindel über ein axiales Spiel, erzeugt durch ein Langloch. Beim Zurückdrehen der Vorschubspindel zeigt die Lage eines Lagerbolzens 32 im Langloch den spannungsfreien Zustand des Instrumentes an. Der erreichte finale Biegewinkel bei spannungsfreiem Instrument wird an der Skalierung 34 anzeigt. Nach erfolgter Biegung des Implantates wird das Instrument durch Lösen der Klemmspindel vom Implantat demontiert.

Das Instrument ist wegen der hohen Anforderungen an die Festigkeit aus hochfesten Instrumentenstählen herzustellen und verfügt zur Handhabung über einen Griff 33, welcher für den Einsatz des Instrumentes in verschiedenen Regionen des Ober- bzw. Unterkiefers schwenkbar und individuell fixierbar ausgeführt ist.

## Patentansprüche

1. Einteiliges Implantat, vorzugsweise aus Titan, zur Verankerung im menschlichen Ober- oder Unterkiefer,
mit einem Verankerungsteil (1), vorzugsweise einem schraubenförmigen Verankerungsteil, zum Einbringen in den Ober- oder Unterkiefer, und
mit einem koronalen Teil (3) zur Aufnahme einer zahnprothetischen Konstruktion, und einer dazwischen angeordneten Biegezone (7),
**dadurch gekennzeichnet, dass**
an einem Ende der Biegezone (7) in Richtung Verankerungsteil (1) eine kragenförmige Geometrie (5) zur Aufnahme eines Instrumentes zur Klemmung des Implantats angeordnet ist.

2. Zahnimplantat nach Anspruch 1, **dadurch gekennzeichnet, dass** die Biegezone (7) verjüngt ausgebildet ist.

3. Zahnimplantat nach Anspruch 1 oder 2, **dadurch gekennzeichnet, dass** die Geometrie der Biegezone (7) sich ausgehend von der kragenförmigen Geometrie (5) so verjüngt, dass bei Biegung entlang der Biegezone konstante Biegespannungen im Querschnitt auftreten.

4. Zahnimplantat nach einem der Ansprüche 1 bis 3, **dadurch gekennzeichnet, dass** das Implantat aus einer hoch plastisch deformierbaren Beta-Titanlegierung hergestellt ist.

5. Zahnimplantat nach einem der Ansprüche 1 bis 4, **dadurch gekennzeichnet, dass** die kragenförmige Geometrie (5) verdickt und/oder wulstförmig und/oder rotationssymmetrisch ausgebildet ist.

6. Zahnimplantat nach einem der Ansprüche 1 bis 5, **dadurch gekennzeichnet, dass** die kragenförmige Geometrie (5) im Längsschnitt rund, dreiecksförmig oder rechteckig ausgebildet ist.

7. Biegeinstrument, bestehend
aus einer Klemmvorrichtung (22, 23), vorzugsweise aus einer mechanischen Klemmvorichtung, zur Klemmung einer kragenförmigen Geometrie (5) an einem Zahnimplantat, und
aus einer Haltevorrichtung (20) zur Fixierung eines koronalen Teils (3) des Zahnimplantates
sowie aus einer Vorrichtung (26, 27), durch welche die Haltevorrichtung (20) gegenüber der Klemmvorrichtung (22, 23) definiert bewegbar ist.

8. Biegeinstrument nach Anspruch 7, **dadurch gekennzeichnet, dass** die Vorrichtung (26, 27) als eine Biegevorrichtung ausgebildet ist.

9. Biegeinstrument nach Anspruch 7 oder 8, **dadurch gekennzeichnet, dass** die Haltevorrichtung (20) auf einem Kreisbogen relativ zur Klemmvorrichtung (22, 23) bewegbar ist.

10. Biegeinstrument nach einem der Ansprüche 7 bis 9, **dadurch gekennzeichnet, dass** die Haltevorrichtung (20) mittels der Biegevorrichtung (26, 27) relativ zur Klemmvorrichtung (22, 23) bewegbar ist.

11. Biegeinstrument nach einem der Ansprüche 7 bis 10, **dadurch gekennzeichnet, dass** die Klemmvorrichtung (22, 23) und/oder die Biegevorrichtung mit einem Gewindespindelantrieb ausgebildet sind.
